(19)

Europäisches
Patentamt
European
Patent Office
Office européen
des brevets

(11) **EP 4 177 007 A1**

(12) **EUROPEAN PATENT APPLICATION**

(43) Date of publication:
**10.05.2023 Bulletin 2023/19**

(21) Application number: **22205252.4**

(22) Date of filing: **03.11.2022**

(51) International Patent Classification (IPC):
**B24B 7/06** *(2006.01)*  **B24B 27/00** *(2006.01)*
**B24B 49/12** *(2006.01)*  **G01B 11/30** *(2006.01)*
**G01N 21/57** *(2006.01)*

(52) Cooperative Patent Classification (CPC):
**B24B 49/12; B24B 7/06; G01B 11/30; G01N 21/57;**
**G01N 21/8921;** B24B 27/0069

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2021  IT 202100028331**

(71) Applicant: **ITALVISION - S.R.L.**
**42013 Casalgrande (RE) (IT)**

(72) Inventor: **CAPPONI, Marco**
**42122 REGGIO EMILIA (IT)**

(74) Representative: **Corradini, Corrado et al**
**Ing. C. Corradini & C. S.r.l.**
**Via Dante Alighieri 4**
**42121 Reggio Emilia (IT)**

(54) **DEVICE AND METHOD FOR MEASURING A PARAMETER INDICATIVE OF A POLISHING DEGREE OF A MOVING SLAB**

(57)     A device (10) for measuring a parameter indicative of a polishing degree of a moving slab (L) which comprises:
- a support plane (21) on which at least one slab (L) passes along an advancement direction (A) parallel to the support plane (21);
- at least one measuring apparatus (40) arranged above the support plane (21), at a non-zero distance therefrom, wherein the measuring apparatus (40) comprises a plurality of glossmeters (44) placed side by side with each other along a flanking direction parallel to the support plane (21) and inclined, preferably orthogonal, to the advancement direction (A), wherein each glossmeter (44) is configured to measure a respective value of a parameter indicative of a polishing degree of the slab (L) passing on the support plane (21).

FIG.1

**Description**

TECHNICAL FIELD

The present invention relates to a device and method for measuring a parameter indicative of a polishing degree, preferably expressed in a Gloss scale, of a moving slab, e.g. a ceramic slab (subjected to polishing/lapping of its visible surface).

PRIOR ART

As known, ceramic slabs, also known as large-size slabs, are generally subjected to grinding, lapping and polishing of the visible surface.

After these surface finishing operations, the slab may be cut into smaller slabs of the desired size for tile installation.

The presence of surface defects on the slab, e.g. abrasions, scratches, streaks, due to imperfect or uneven grinding, lapping or polishing can reduce the commercially exploitable surface area of the slab, hence the number and dimension of elements that may obtained from the initial slab cut, increasing the number of waste and the number of second- or third-choice square metres.

The slab is examined, before being cut, in order to detect surface defects and to determine the amount, position and size of tiles or other pieces that can be cut from the slab in order to minimise waste or second and third choices.

Examining visually the slabs is an operation that requires skilled and reliable personnel. In an attempt to standardise this checking operation as much as possible, the measurement of a polishing degree, expressed in a Gloss scale, on ceramic slabs is currently carried out by means of manual sample measurements (on some of the slabs) using a manual glossmeter that is placed at certain sampling points on the slab.

The points sampled are generally limited, usually referred to areas at the corners and in the centre of the sampled slab.

A need felt in the industry is to make slab checking operations more efficient and comprehensive without increasing costs and time for such checking.

In particular, a need felt in the industry is to allow accurate and precise measurement of the point gloss on the entire visible surface of the slab and, preferably, on all the slabs in the line, i.e. all the slabs in the production line (coming out of the grinding, lapping and/or polishing machine) without necessarily affecting the slab production/processing (i.e. without requiring measuring stations that need to temporarily stop the slabs or slow down the slab feed line).

DISCLOSURE OF THE INVENTION

An object of the present invention is to solve these and other needs of the prior art, with a simple, rational and cost-effective solution.

These objects are achieved by the features of the invention set forth in each independent claim. The dependent claims outline preferred and/or particularly advantageous aspects of the invention.

For the above-mentioned purposes, the invention, in particular, makes available a device for measuring a parameter indicative of a polishing degree of a moving slab comprising:

- a support plane on which at least one slab passes along an advancement direction parallel to the support plane;
- at least one measuring apparatus arranged above the support plane, at a non-zero distance therefrom, wherein

the measuring apparatus comprises a plurality of glossmeters placed side by side with each other along a flanking direction parallel to the support plane and inclined, preferably orthogonal, to the advancement direction, wherein each glossmeter is configured to measure a respective value of a parameter indicative of a polishing degree of the slab passing on the support plane.

Thanks to this solution, by a single "scanning" or by passing the slab under the measuring apparatus, the latter is able to measure the polishing degree of the entire slab surface or most of it, so as to have a precise picture of any defects or the location in the slab of areas with correct polishing or insufficient polishing.

Advantageously, the device may comprise a support bridge comprising a longitudinal crossbeam extending with its own longitudinal axis parallel to the support plane and to the flanking direction, wherein the measuring apparatus is supported by the longitudinal crossbeam of the support bridge.

Furthermore, the measuring apparatus may be associated as movable (to the support bridge) along a sliding direction orthogonal to the support plane to adjust a distance between each glossmeter and the support plane.

Thanks to this solution, it is possible to adapt the working height of the measuring apparatus depending on the thickness of the slabs L passing on the support plane. According to one aspect of the invention, it is possible to envisage that the device comprises a plurality of said measuring apparatuses placed side-by-side along the flanking direction.

Thanks to this solution, it is possible to cover the entire span of the support plane, even if the latter has to be enlarged or has large dimensions.

Preferably, each glossmeter may comprises a light source configured to emit an emitted light beam directed along a prevalent emission direction incident the support plane and inclined with respect to the support plane by an acute angle, a measuring detector configured and positioned to receive a reflected light beam, wherein the reflected light beam derives from the light beam emitted as a result of a reflection on the slab passing on the support plane.

Advantageously, then, at least one of the plurality of glossmeters of the measuring apparatus may comprise a reference detector configured to receive at least a portion of the light beam emitted by the respective light source.

Thanks to this, it is possible to correct any errors in the readings of each measuring detector (of the measuring apparatus) deriving, for example, from any light drifts mainly due to the temperature that develops with the measuring apparatus as a function of either drops in the intensity of the emitted light beam or other defects.

Furthermore, each glossmeter may comprise a first collimator configured to collimate the emitted light beam and placed on an emitting path of the emitted light beam and, for example, a second collimator configured to collimate the reflected light beam and placed on a reflecting path of the reflected light beam.

Advantageously, the measuring apparatus may comprise at least one electronic measuring unit operatively connected to at least one or each measuring detector and to the at least one reference detector, wherein the electronic measuring unit is configured to:

- compare a measurement value of the reflected light beam intensity measured in a predetermined time range by one or each measuring detector with a reference value of the light beam intensity emitted by the light source measured in the same time range by the reference detector; and
- determine a value of the parameter indicative of the polishing degree of the slab passing on the support plane based on a comparison between the measurement value and the reference value.

Thanks to this solution, the measurement of the indicative parameter appears particularly precise and accurate.

According to a preferred aspect of the invention, the indicative parameter may be the intensity of the reflected light, preferably expressed in Gloss (GU) degrees, preferably Gloss 60.

For the same purposes set-forth above, the invention also makes available a method for acquiring a measurement of a parameter indicative of a polishing degree of a moving slab comprising:

- moving the slab on a support plane along an advancement direction parallel to the support plane;
- hitting the moving slab with a plurality of light beams emitted by respective light sources, wherein the emitted light beams are parallel to each other and lying on a plane parallel to the advancement direction;
- measuring a value of a parameter indicative of a polishing degree for each light beam emitted along an entire dimension of the slab parallel to the advancement direction.

BRIEF DESCRIPTION OF THE DRAWINGS

Further features and advantages of the invention will be more apparent after reading the following description provided by way of a non-limiting example, with the aid of the accompanying drawings.

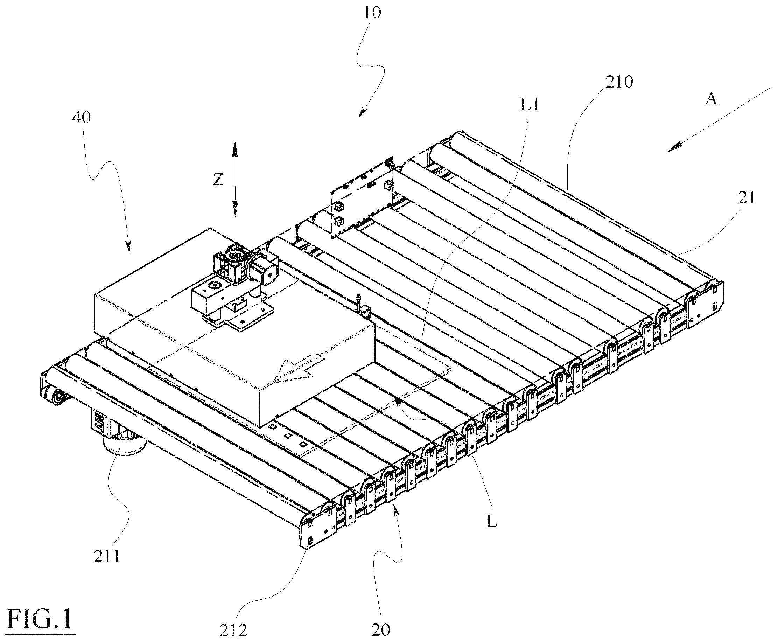

Figure 1 is an axonometric view of a device according to the invention.

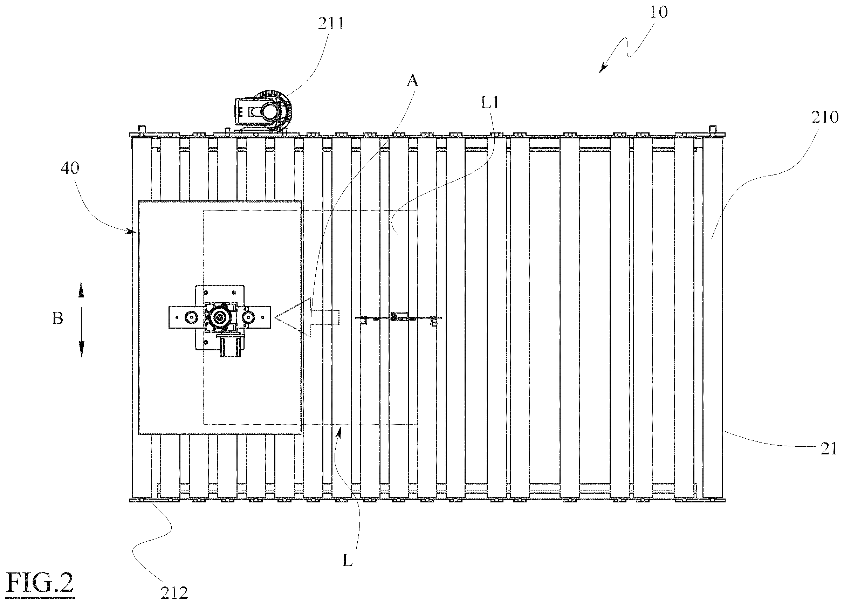

Figure 2 is a plan view of Figure 1.
Figure 3 is an elevation side view of Figure 1.
Figure 4 is a view of the detail regarding the measuring apparatus of the device of Figure 3.
Figure 5 is an elevation front view of Figure 1.
Figure 6 is a view of the detail regarding the measuring apparatus of the device of Figure 5.

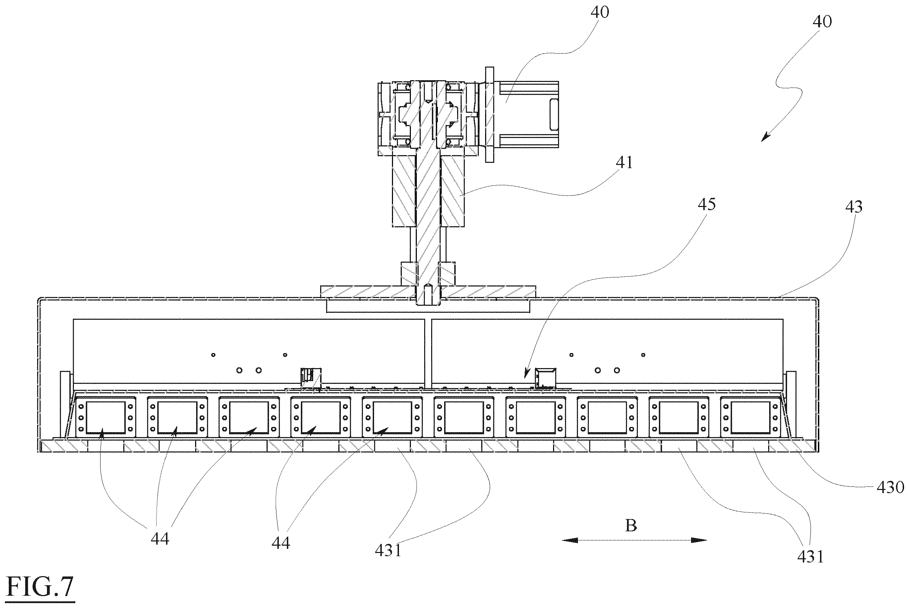

Figure 7 is a sectional view along the trace of section VII-VII of Figure 4.
Figure 8 is a sectional view along the trace of section VIII-VIII of Figure 6.
Figure 9 represents a map of the polishing degree obtained by the measuring apparatus according to the invention.
Figure 10 is a plan view of an alternative embodiment of the device according to the invention.

BEST MODE TO IMPLEMENT THE INVENTION

With particular reference to these Figures, a device for measuring a parameter indicative of a polishing degree, e.g. expressed in a Gloss (GU) scale, e.g. Gloss 60, of an slab L, e.g. a moving ceramic slab (previously submitted to grinding/lapping and/or polishing), has been globally referred to as 10.

The device 10 comprises a support 20 to support at least one slab L resting on a lower (main) support surface thereof, also referred to as the laying surface, opposite the upper surface L1 (main surface or also referred to as the visible surface) to be controlled by the device.

The support 20 comprises a horizontal support plane 21 on which the slabs L are intended to rest with their surface L1 to be checked facing upwards.

The support 20 preferably comprises an advancement unit for advancing the slab L supported on the support plane 21 along a predetermined advancement direction A belonging to the support plane 21 (i.e. horizontal), e.g. substantially rectilinear.

In the preferred example shown, the advancement unit comprises a roller conveyor, in particular, the advancement unit comprises a roller table 210, which generally provides a plurality of rotating rollers arranged parallel to each other and mutually coplanar to define the aforesaid horizontal support plane 21 on which the slabs L to be decorated rest.

In practice, each roller of the roller table 210 rotates around its own horizontal rotation axis perpendicular to the advancement direction A.

The rollers of the roller table 210 are connected to a motor 211, in particular by means of transmission members such as chains or belts, which motor 211 is adapted to make them rotate on themselves in a synchronous manner so as to advance the slabs L in the aforementioned horizontal advancement direction A (preferably in one travelling direction only).

The rotation speed of the rollers of the roller table 210 adjusts the advancement rate of the slabs L along the advancement direction A, which can be set and adjusted according to processing requirements, e.g. it is constant and equal to the advancement rate of the slabs L along the production/processing line.

The roller table 210 is provided with a floor standing support frame 212 (not shown, as known and common in the industry), in particular, the roller table 212 is provided with two side panels resting on the ground at their lower end and rotatably supporting, at their top, the opposite distal ends of the rollers of the roller table 210.

The motor 211 driving the roller table may be arranged below the rollers themselves between the two side panels or in another suitable position.

The roller table 210 may have a prevalent dimension parallel to the advancement direction A imposed by the rollers.

Alternatively, the advancement unit could be defined by a belt conveyor or other conveyor of a type known in the slab L conveying industry.

A sensor S1 configured to detect a thickness (i.e. the maximum distance between the surface L1 and the support plane 21) of the slab L resting on support plane 21 is associated to the support 20, e.g. the support plane 21 thereof.

The sensor S1 is for instance placed proximal to the upstream end of the support plane in the slab L advancement direction along the advancement direction A.

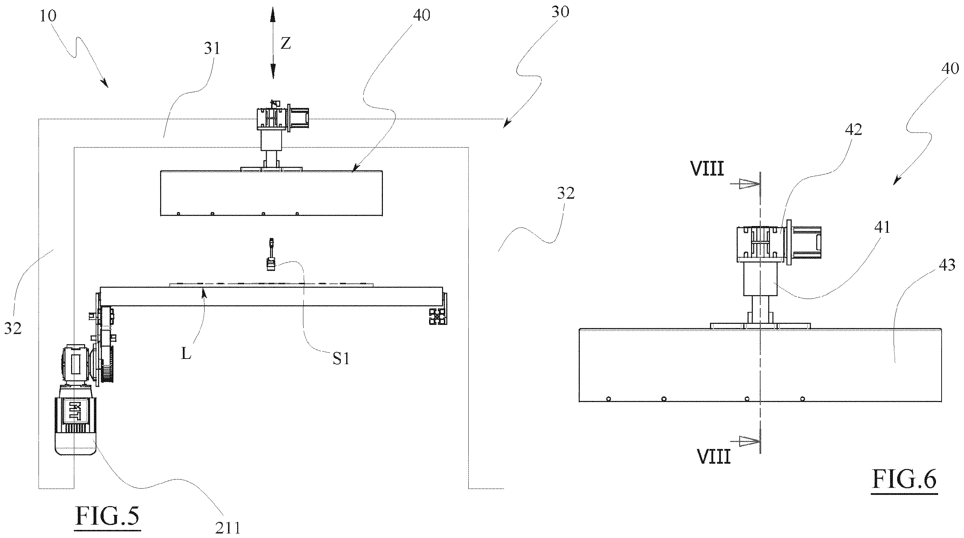

For example, the device 10 comprises a support bridge 30 (only schematically shown in Figure 5) comprising a longitudinal crossbeam 31 extending with its own longitudinal axis parallel to the support plane 21 and orthogonal to the advancement direction.

The crossbeam 31 is held hanging above the support plane 21 (e.g. in a predetermined axial position along the advancement direction A) by a pair of uprights 32, that are fixed, e.g. rigidly connected to the frame 212 of the support 20 and/or provided with support to the ground.

In addition, the device 10 comprises at least one measuring apparatus 40 configured to measure a parameter indicative of the polishing degree of the surface L1 of the slab L during the advancement movement on the support plane 21 along the advancement direction A thereof.

In particular, the measuring apparatus 40 is configured, as will be better described hereinafter, to measure the (substantially) indicative parameter for the entire surface L1 (both in the direction parallel to the advancement direction A and for the direction orthogonal to the advancement direction A and parallel to the support plane 21).

The measuring apparatus 40 is arranged above the support plane 21, at a non-zero distance therefrom, as will be better described hereinafter.

For example, the measuring apparatus 40 is placed proximal to the downstream end of the support plane in the slab L advancement direction along the advancement direction A, e.g. downstream of the sensor S1 (and proximal thereto).

The measuring apparatus 40 is supported by the crossbeam 31, e.g. below it, so as to face the support plane 21 of the support 20.

Preferably, the measuring apparatus 40 is movably connected, preferably with a single translational degree of freedom, to the crossbeam 31, with the possibility of sliding along a sliding direction Z orthogonal to the support plane 21 for adjusting the distance between the measuring apparatus 40 and the support plane 21 (and thus between the measuring apparatus 40 and the surface L1 of the slabs L resting on the support plane 21, depending on the thickness of the slabs L).

In particular, the measuring apparatus 40 comprises a sub-frame 41 slidably associated with the crossbeam 31, e.g. by means of a guide that allows the frame 41 to slide with respect to the crossbeam 31 along the sliding direction Z.

In addition, the measuring apparatus 40 comprises an actuator 42, which is supported by the crossbeam 31 and is configured to move (slide) the sub-frame 41 (and, thus, the measuring apparatus 40) along the sliding direction Z.

The actuator 42 is, for example, a linear actuator, preferably an electric motor provided with an encoder (and a worm gear).

The measuring apparatus 40 comprises a box-shaped body 43, which is for example rigidly connected to the sub-frame 41.

The box-shaped body 43 comprises a lower wall 430 facing and parallel to the support plane 21.

In the lower wall 430 a plurality of windows 431, either open or filled with a transparent (to visible light) infill element, are obtained.

The windows 431, for instance, are placed side by side along a flanking direction B parallel to the support plane 21 and inclined, preferably orthogonal, to the advancement direction A imposed by the support 20 on the slabs L.

The measuring apparatus 40 further comprises a plurality (or an array) of glossmeters 44 (e.g., 10 in number), e.g., arranged inside the box-shaped body 43.

The glossmeters 44 are placed side-by-side along the flanking direction B.

For example, the glossmeters 44 are adjacent

7      **EP 4 177 007 A1**      8

to each other and, preferably, equally spaced-apart from each other, e.g. where the distance between the various glossmeters 44 is 50 mm.

Each glossmeter 44 is configured to measure a respective value of a parameter indicative of a polishing degree of the surface L1 of the slab L passing on the support plane 21 along the advancement direction A.

In practice, each glossmeter 44 is configured to measure the indicative parameter along a respective measuring strip (having a width substantially equal to the distance between the aforementioned glossmeters 44) of the surface L1 of the slab L, wherein each measuring strip is subtended (i.e. aligned in plan along the sliding direction Z) to the respective glossmeter 44 while the slab L advances along the advancement direction A.

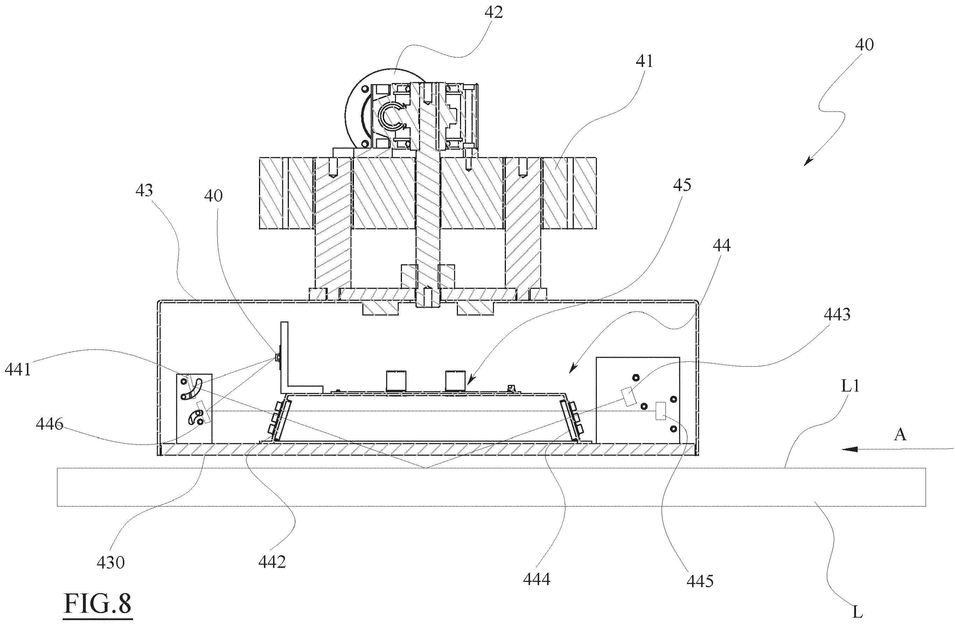

Each glossmeter 44 comprises a light source 440 configured to emit a directed beam of emitted light (schematically shown in Figure 8).

Directed light beam means, herein, a beam of light that mainly extends along a prevalent direction (or beam axis) and opens, fan-shaped (so called, light cone) from such a prevalent direction by a predetermined lighting angle, for example acute, preferably lower than or equal to 30°.

For example, the light source 440 is of the semiconductor or LED type (preferably point-shaped).

The light source 440 is configured to emit the emitted light beam so that it is directed into a respective window 431 at a predetermined inclination with respect to the support plane 21.

In particular, the emitted light beam (includes at least one end section which) is directed along a prevalent emission direction incident the support plane 21 and inclined with respect to the support plane by an acute angle, e.g. substantially of 30°.

The emitted light beam has the beam axis arranged in a lying plane orthogonal to the support plane 21 and parallel to the advancement direction A.

The axis of the emitted light beam defines an emission path of the emitted light beam from the light source 440 to the surface L1 of the slab L (passing below the measuring apparatus 40).

Preferably, the light source 440 of each glossmeter 44 is fixed to a support wall (e.g. common for all glossmeters 44) rising from the lower wall 430 of the box-shaped body 43 (therein).

In the example, the light source 440 is fixed to the front face of the support wall so that the light beam previously (or concordantly) emitted is directed in the advancement direction of the slabs L along the advancement direction A.

In such a case, each glossmeter 44 comprises at least a first mirror 441 configured to direct the emitted light beam (i.e. its reflected end section) back (or opposite to) the advancement direction of the slabs L along the advancement direction A (within the respective window 431).

The first mirror 441 is, for example, supported by a fastening block which is in turn fastened to (and rising from) the lower wall 430 of the box-shaped body 41 (therein).

Each first mirror 441 is associated with the fastening block so as to be inclined or oriented, e.g. around an oscillation axis parallel to the support plane 21 and orthogonal to the advancement direction A.

In addition, each glossmeter 44 comprises a first collimator 442 configured to collimate/straighten the emitted light beam and placed in the emission path of the emitted light beam, e.g. downstream of the first mirror 441 (in the emission direction of the emitted light beam).

For example, the first collimator 442 comprises or consists of a lens (transparent to the visible light), preferably cylindrical (with the central axis inclined with respect to the support plane 21 by an acute angle, e.g. of 30°).

The first collimator 442 is, for example, fixed to a front wall (at an opening thereof) of a containment bell rising from the lower wall 430 of the box-shaped body 43 and placed therein.

Each glossmeter 44 further comprises a measuring detector 443 configured and positioned to receive a directed reflected light beam, wherein the reflected light beam corresponds to the portion of the emitted light beam reflected by the surface L1 of the slab L, i.e., as a result of the same being reflected on the surface L1 of the slab L passing on the support plane 21 along the advancement direction A.

The measuring detector 443 is, for example, supported by a respective fastening block which is in turn fastened to (and rising from) the lower wall 430 of the box-shaped body 41 (therein) on the opposite side of the light source 440 to the window 431 along the advancement direction A.

Each measuring device 443 is, for example, associated with the respective fastening block so as to be inclined or oriented, e.g. around an oscillation axis parallel to the support plane 21 and orthogonal to the advancement direction A.

For example, the measuring detector 443 is defined by a photodiode.

Preferably, the measuring detector 443 is configured to measure a value vi of intensity I of the reflected light beam (from the surface L1 of the slab L) it receives.

For example, the parameter indicative of the polishing degree of the surface L1 of the slab L is the intensity I of the reflected light beam, preferably expressed in Gloss degrees. In addition, each glossmeter 44 comprises a second collimator 444 configured to collimate/straighten the reflected light beam and placed in the reflection path of the reflected light beam (from the surface L1 of the slab to the measuring detector 443, interposed therebetween).

For example, the second collimator 444 comprises or consists of a lens (transparent to the visible light), preferably biconvex (with the central axis inclined with respect to the support plane 21 by an acute angle,

5

e.g. of 30°).

The second collimator 444 is, for example, fastened to a rear wall (at an opening thereof) of the containment bell rising from the lower wall 430 of the box-shaped body 43 and placed therein.

At least one glossmeter 44 of the plurality of glossmeters 44 of the measuring apparatus 40 comprises a reference detector 445.

For example, only one of the glossmeters 44 of the plurality of glossmeters 44 of the measuring apparatus 40 comprises the reference detector 445, or some of them, e.g. two of them not adjacent to each other, or all of the glossmeters 44 of the plurality of glossmeters 44 of the measuring apparatus 40.

The reference detector 445 is configured to receive at least a portion of the light beam emitted by the respective light source 440, for example at least a perimeter portion (of the light cone) of the emitted light beam.

For example, the reference detector 445 is supported by a respective fastening block (e.g. the same fastening block supporting the measuring detector) which is in turn fastened to (and rising from) the lower wall 430 of the box-shaped body 41 (therein) on the opposite side of the light source 440 to the window 431 along the advancement direction A.

Each reference detector 445 is, for example, associated with the respective fastening block so as to be inclined or oriented, e.g. around an oscillation axis parallel to the support plane 21 and orthogonal to the advancement direction A.

For example, the reference detector 445 is defined by an additional photodiode. Preferably, the reference detector 443 is configured to measure a value $v_0$ of intensity I (of the perimeter portion) of the emitted light beam it receives.

For example, the glossmeter 44 comprising the reference detector 445 includes at least a second mirror 446 configured to direct (the perimeter portion of) the light beam back-emitted in (or in the direction opposite to) the advancement direction of the slabs L along the advancement direction A (parallel to the support plane 21 and the advancement direction A towards the reference detector).

The second mirror 446 is, for example, supported by a fastening block (e.g. the same fastening block supporting the first mirror 441) in turn fastened to (and rising from) the lower wall 430 of the box-shaped body 41 (therein).

The second mirror 446 is associated with the fastening block so as to be inclined or oriented, e.g. around an oscillation axis parallel to the support plane 21 and orthogonal to the advancement direction A.

Furthermore, the second mirror 446 is configured to direct (the perimeter portion of) the emitted light beam so that it passes through, in the order, the first collimator 442 and the second collimator 444 (before reaching, thus straightened, the reference detector 445). The measuring apparatus 40 further comprises at least one electronic measuring unit 45 operatively connected to at least one or, preferably, each measuring detector 443 and the at least one reference detector 444.

The electronic measuring unit 45 is for example housed inside the box-shaped body 430, e.g. fastened above a top wall of the containment bell.

The electronic measuring unit 45 comprises, for example, a processing module, such as a microprocessor or a processor, and a storage module.

The electronic measuring unit 45 is, for example, connected to a user interface, such as a screen and/or terminal or the like, through which a user can enter input values and/or receive information regarding output values transmitted and/or received by the electronic measuring unit 45.

The electronic measuring unit 45, is preferably, configured to determine/measure an indicative (quantitative) parameter of the polishing degree of the surface L1 of the slab L (moving on the support plane 21).

The electronic measuring unit 45 is configured to compare the measurement value vi of the intensity I of the reflected light beam measured in a predetermined time interval by one or each measuring detector 443 with the reference value $v_0$ of the intensity I of the light beam emitted by the light source 440 measured in the same time interval by the reference detector 445.

For example, the electronic measuring unit 45 is configured to repeat the above-mentioned comparison for the entire measuring time during which the light source 440 generates the emitted light beam (which hits the surface L1 of the slab L), i.e. for the entire dimension of the slab L parallel to the advancement direction A.

For example, the electronic measuring unit 45 is configured to determine a (Gloss, preferably Gloss 60) value of the parameter indicative of the polishing degree of the surface L1 of the slab L passing on the support plane 21 on the basis of the comparison of the measurement value vi of the intensity I of the reflected light beam with the reference value $v_0$ of intensity I of the emitted light beam.

For example, the electronic measuring unit 45 is configured to calculate the value (Gloss, preferably Gloss 60) of the indicative parameter of the polishing degree of the surface L1 of the slab L using the following formula:

$$GU = m * (v_1 / v_0);$$

wherein GU is the value of the parameter indicative of the polishing degree, vi is the measurement value measured using the measuring device 443, $v_0$ is the reference value measured using the reference detector 445, and m is a (constant) correction coefficient. The correction coefficient m, for example, is a coefficient calculated during the calibration of the various glossmeters 44 (at various GLOSS values), and, for instance, depends on the response of each glossmeter 44.

This correction coefficient m is preferably calculated during the initial calibration of the measuring apparatus 40 and stored in a memory unit of the electronic measuring unit 45. Preferably, the electronic measuring unit 45 is configured to determine, as described above, the (Gloss, preferably Gloss 60) values of the parameter indicative of the polishing degree of the surface L1 of the slab L for each glossmeter 44 and for the entire dimension of the slab L along the advancement direction A.

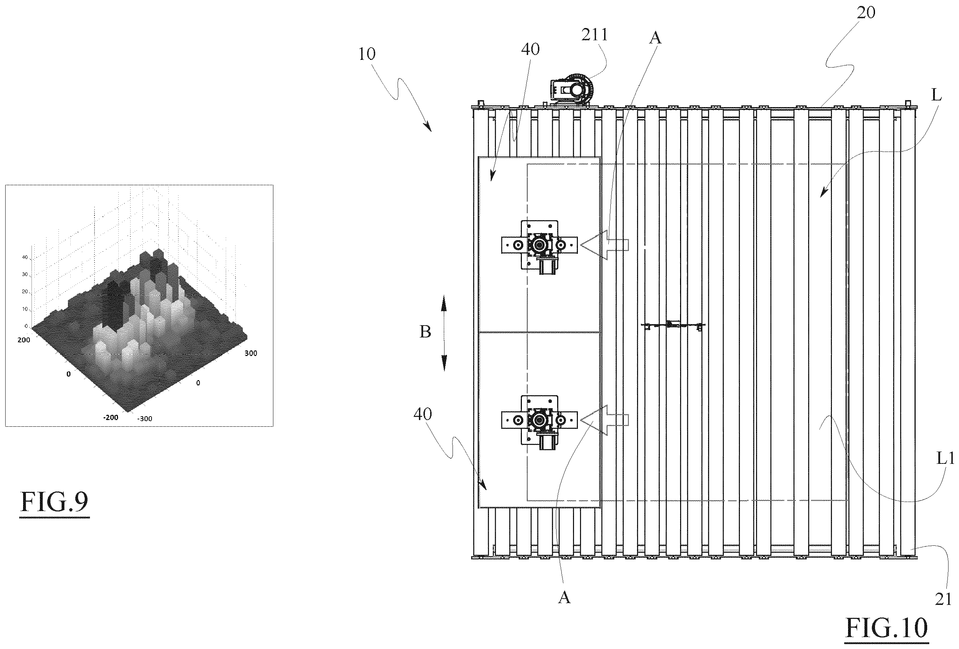

In particular, the electronic measurement unit 45, for each slab L, is configured to receive as input, from each glossmeter 44 of the measurement apparatus 40, the measurement values vi of the intensity I of the reflected light beam (and the reference values $v_0$ of intensity I of the emitted light beam) and provide as output a (two- or three-dimensional) map or heat map, as shown, for example, in Figure 9, wherein the (Gloss, preferably Gloss 60) values of the parameter indicative of the polishing degree of the surface L1 of the slab L for each glossmeter 44 (flanking direction B) and for the entire dimension of the slab L along the advancement direction A are shown.

Each (Gloss, preferably Gloss 60) value range of the parameter indicative of the polishing degree of the surface L1 of the slab L for each glossmeter 44 and for the entire dimension of the slab L along the advancement direction A, in the map, may be associated with a corresponding reference colour.

The measuring apparatus 40, is preferably configured to perform the aforementioned measurement on the slab L passing through the support 20 along the advancement direction.

For example, the device 10 may comprise a single measuring apparatus 40 (when the width thereof along the flanking direction) is greater than or equal to the maximum width of the slabs L to be measured and/or is substantially equal to the width of the support plane 21 in the direction orthogonal to the advancement direction A.

It is not excluded, however, that in certain circumstances, the device 10 comprises a plurality of said measuring devices 40 (defining the modules of a modular sectional structure), e.g., placed side-by-side along the flanking direction B, so as to cover the entire span/width of the support plane 21.

Each measuring apparatus 40 is, for example, supported by the same crossbeam 31, in a movable manner as described above.

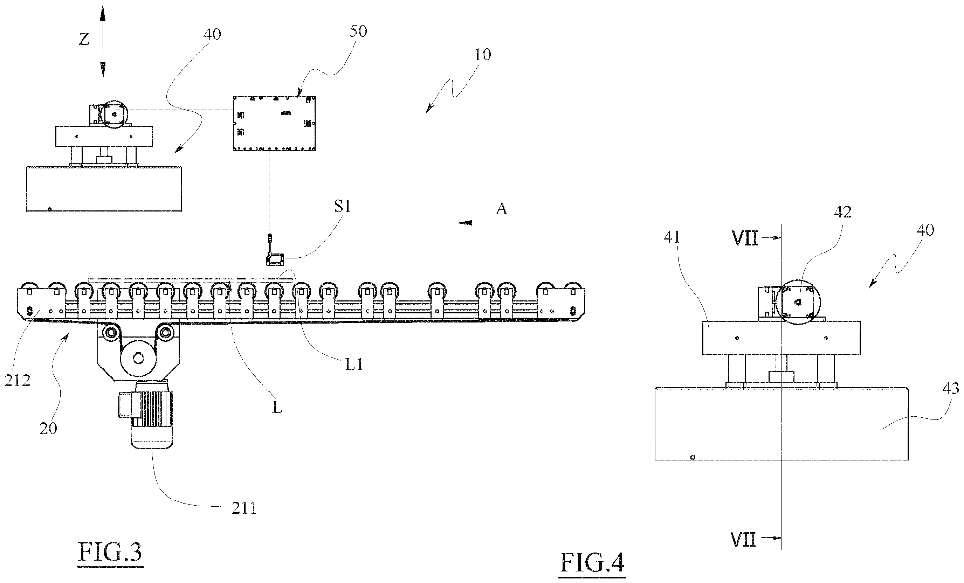

Furthermore, the device 10 comprises an electronic control unit 50 (shown in Figure 3), which is for instance operatively connected to the sensor S1 and (each) actuator 42.

The electronic control unit 50, in particular, is configured to measure a thickness of the slab L (i.e. to receive from the sensor S1 a signal representative of the thickness of the slab L, i.e. the distance of the surface L1 of the slab L from the support plane 21) and to define a positioning height of the measuring apparatus 40 (each of them), i.e. defined by the distance of the windows 431 from the support plane 21, based on the measured thickness.

For example, the positioning height is calculated using the formula:

$$Q = s + k,$$

wherein Q is the positioning height, s is the measured thickness of the slab L resting on the support plane 21 and k is a (non-zero) constant, e.g. 10 mm.

Thus, the operation of the device 10 for carrying out a method for acquiring a measurement of a parameter indicative of a polishing degree of a moving slab is essentially as follows.

Firstly, the support 20 is set so that the slabs L can advance on the support plane A at a set (and fixed) rate, e.g. equal to the advancement rate of the slabs L in the processing/production line upstream (and downstream) of the device 10.

Specifically, the motor 211 is controlled to rotate so that roller table 210 makes the slabs L advance, along the advancement direction A, at the desired rate.

In practice, the method provides moving the slab on a support plane along an advancement direction parallel to the support plane, e.g. by advancing the slab L on the support plane 21 at a predetermined advancement rate.

When the slab L is at the sensor S1, it detects the thickness of the slab L, i.e. the distance of the surface L1 from the support plane 21.

In practice, the method may provide measuring the thickness of the slab L (and/or the distance of the surface L1 from the support plane 21).

At this point, the electronic control unit 50 places each measuring apparatus 40 at the positioning height.

When the slab L is below the measuring apparatus 40, the latter is controlled to activate the light source 440 of each glossmeter 44 of the measuring apparatus 40.

Thus, the surface L1 of the slab L moving on the support plane 21 is hit by a plurality of (parallel and equidistant) light beams emitted by respective light sources 440.

At the same time, the measuring detector 443 of each glossmeter 44 measures (possibly following a correction obtained by means of the reference detector 445) a value of a parameter indicative of a polishing degree, for example expressed in a Gloss scale (e.g. Gloss 60), expressed in GU, for each light beam emitted along an entire dimension of the slab parallel to the advancement direction.

The values of the indicative parameter measured by each glossmeter 44 of the measuring apparatus 40 (along the respective detection strip) are gathered into a map (or heat map) that identifies the polishing degree of each point on the surface L1 of the slab L.

The invention thus conceived is susceptible to many modifications and variants, all falling within the same inventive concept.

Moreover, all the details can be replaced by other technically equivalent elements.

In practice, any materials and also any contingent shapes and sizes may be used, depending on the needs, without departing from the scope of protection of the following claims.

**Claims**

1. A device for measuring a parameter indicative of a polishing degree of a moving slab which comprises:

   - a support plane on which at least one slab passes along an advancement direction parallel to the support plane;
   - at least one measuring apparatus arranged above the support plane, at a non-zero distance therefrom, wherein
   the measuring apparatus comprises a plurality of glossmeters placed side by side with each other along a flanking direction parallel to the support plane and inclined, preferably orthogonal, to the advancement direction, wherein each glossmeter is configured to measure a respective value of a parameter indicative of a polishing degree of the slab passing on the support plane.

2. The device according to claim 1, which comprises a support bridge comprising a longitudinal crossbeam extending with its own longitudinal axis parallel to the support plane and to the flanking direction, wherein the measuring apparatus is supported by the longitudinal crossbeam of the support bridge.

3. The device according to claim 1 or 2, wherein the measuring apparatus is movable along a sliding direction orthogonal to the support plane for adjusting a distance between each glossmeter and the support plane.

4. The device according to claim 1, which comprises a plurality of said measuring apparatuses placed side-by-side along the flanking direction.

5. The device according to claim 1, wherein each glossmeter comprises a light source configured to emit an emitted light beam directed along a prevalent emission direction incident the support plane and inclined with respect to the support plane by an acute angle, a measuring detector configured and positioned to receive a reflected light beam, wherein the reflected light beam derives from the light beam emitted as a result of a reflection on the slab passing on the support plane.

6. The device according to the preceding claim, wherein at least one glossmeter of the plurality of glossmeters of the measuring apparatus comprises a reference detector configured to receive at least a portion of the light beam emitted by the respective light source.

7. The device according to claim 5, wherein each glossmeter comprises a first collimator configured to collimate the light beam emitted and placed on an emission path of the emitted light beam and a second collimator configured to collimate the reflected light beam and placed on a reflection path of the reflected light beam.

8. The device according to claim 5, wherein the measuring apparatus comprises at least one electronic measuring unit operatively connected to the at least one or each measuring detector and to the at least one reference detector, wherein the electronic measuring unit is configured to:

   - compare a measurement value of the reflected light beam intensity measured in a predetermined time range by one or each measuring detector with a reference value of the light beam intensity emitted by the light source measured in the same time range by the reference detector; and
   - determine a value of the parameter indicative of the polishing degree of the slab passing on the support plane based on a comparison between the measurement value and the reference value.

9. The device according to claim 1, wherein the indicative parameter is the intensity of the reflected light, preferably expressed in Gloss degrees.

10. A method for acquiring a measurement of a parameter indicative of a polishing degree of a moving slab comprising:

    - moving the slab on a support plane along an advancement direction parallel to the support plane;
    - hitting the moving slab with a plurality of light beams emitted by respective light sources, wherein the emitted light beams are parallel to each other and lying on a plane parallel to the advancement direction;
    - measuring a value of a parameter indicative of a polishing degree for each light beam emitted along an entire dimension of the slab parallel to the advancement direction.

FIG.1

FIG.2

FIG.3

FIG.4

FIG.5

FIG.6

EP 4 177 007 A1

FIG.7

EP 4 177 007 A1

FIG.8

EP 4 177 007 A1

FIG.9

FIG.10

Europäisches
Patentamt

European
Patent Office

Office européen
des brevets

# EUROPEAN SEARCH REPORT

Application Number

EP 22 20 5252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 880 023 A1 (SIEMAG TRANSPLAN GMBH [DE]) 25 November 1998 (1998-11-25) | 10 | INV. B24B7/06 |
| Y | * claims 1, 6-9; figures 1a, 1b, 2 *  <br> * column 4, line 40 – column 5, line 15 * | 1-9 | B24B27/00 B24B49/12 G01B11/30 |
| X | CN 110 293 566 A (BEIJING DINGXINSHIDAI TECH CO LTD) 1 October 2019 (2019-10-01) | 10 | G01N21/57 |
| Y | * paragraph [0024]; claim 11; figures 1, 2 * | 1-3,5-9 | |
| Y | WO 2013/110555 A1 (UNIV KAISERSLAUTERN TECHNISCHE [DE]) 1 August 2013 (2013-08-01) * claims 1, 4-6; figure 1 * * page 15, paragraph 4 * | 1-9 | |
| A | IT PI20 070 105 A1 (UNIV PISA) 11 March 2009 (2009-03-11) * the whole document * | 1-10 | |
| A | JP H08 271234 A (NISSHIN STEEL CO LTD) 18 October 1996 (1996-10-18) * the whole document * | 1-10 | TECHNICAL FIELDS SEARCHED (IPC) B24B G01B G01N |

The present search report has been drawn up for all claims

| Place of search | Date of completion of the search | Examiner |
|---|---|---|
| Munich | 30 November 2022 | Endres, Mirja |

EPO FORM 1503 03.82 (P04C01)

## ANNEX TO THE EUROPEAN SEARCH REPORT
## ON EUROPEAN PATENT APPLICATION NO.

EP 22 20 5252

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| EP 0880023 | A1 | 25-11-1998 | AU | 743622 B2 | 31-01-2002 |
| | | | BR | 9805075 A | 16-11-1999 |
| | | | CN | 1211488 A | 24-03-1999 |
| | | | EP | 0880023 A1 | 25-11-1998 |
| | | | JP | H1151877 A | 26-02-1999 |
| | | | KR | 19980087315 A | 05-12-1998 |
| | | | TW | 383238 B | 01-03-2000 |
| | | | US | 6184924 B1 | 06-02-2001 |
| | | | ZA | 984341 B | 19-10-1998 |
| CN 110293566 | A | 01-10-2019 | NONE | | |
| WO 2013110555 | A1 | 01-08-2013 | DE 102012100680 A1 | | 01-08-2013 |
| | | | WO 2013110555 A1 | | 01-08-2013 |
| IT PI20070105 | A1 | 11-03-2009 | ------------------------------ | | |
| JP H08271234 | A | 18-10-1996 | NONE | | |

EPO FORM P0459

For more details about this annex : see Official Journal of the European Patent Office, No. 12/82